# EUROPEAN PATENT SPECIFICATION

(11) **EP 2 724 607 B1**
(45) Date of publication and mention of the grant of the patent: **20.09.2017**
(21) Application number: 13189816.5
(22) Date of filing: 23.10.2013
(51) Int. Cl.: A01D 89/00

(54) **A machine for gathering plant cuttings**
Maschine zum Sammeln von Pflanzenschnittgut
Machine pour la collecte des plantes tondues

(30) Priority: 26.10.2012 IT RE20120074
(43) Date of publication of application: 30.04.2014
(73) Proprietor: D.B.D. S.r.l., 46020 Motteggiana (Mantova) (IT)
(72) Inventor: Vicenzi, Michele, 46044 Goito (Mantova) (IT)
(74) Representative: Corradini, Corrado

(56) References cited:
- FR-A1- 2 342 640
- FR-A1- 2 502 455
- FR-A1- 2 866 520
- FR-A1- 2 962 297
- GB-A- 1 578 207
- US-A- 4 344 276
- US-B1- 8 261 524

## Description

### TECHNICAL FIELD

The present invention is a machine for gathering plant cuttings including, for example, hay, straw, pruned cuttings, or the like.

### PRIOR ART

Machines are known for gathering plant cuttings, including hay, straw, or pruned cuttings, able to convey a gather into a means of collection, including baling machines, or special trailers for the storage of the plant cuttings. Machines of known type for the collection, in particular, of hay comprise a frame affording two lateral elements rotatingly supporting a rotating shaft driven in transversal rotation relative to the advancement direction of the machine.

A plurality of spring-loaded tooth elements is distributed substantially radially and yieldingly hinged to the rotor and able to brush the ground and collect plant cuttings (straw and/or hay and/or other plant cuttings derived from gathering).

The frame is generally articulated and attached posteriorly to a back end of a tractor which receives the product collected by the gathering machine. Gathering machines of relatively extensive widths are increasingly common, offering significant advantages as regards optimising gathering of crops in wide strips, which provide improved aeration of product, a reduced number of gathering runs, reduced crush damage to hay and/or straw, reduced gathering and drying times of a gathered product.

However, these gathering machines, and in particular considerably wide gathering machines, suffer from a number of disadvantages, including the high production costs of long rotating shafts.

Further, machines exist for gathering plant offcuts, where the rotor comprises a long central shaft supported at opposite ends by the lateral flanks and a plurality of pins, rotating associated to support plates arranged in intermediate positions and which are splined on the central shaft.

The gathering teeth are fixed on the pins and the pins themselves are oscillated with respect to the axis thereof by cams located on the ends of the central shaft which transform the rotation motion of the central shaft into oscillations of the pins and therefore of the gathering teeth.

Examples of this type of machine are described in US document US 8 261 524 and document FR 2 505 455.

Other examples of gathering machines, in which the pins supporting the gathering teeth are again activated in oscillation by cams, are disclosed in documents FR 2866 520, GB 1 578 207 and FR 2 962 297.

These known-type machines further comprise a plurality of rotors associated to one another substantially coaxially and rotatably, each moved by a respective motor.

These examples of gathering machines for provided with cams activating the pins supporting the gathering teeth are, however, very complex and each rotor is particularly laborious and expensive to assemble and adjust, in both economic and time terms, due to the various elements in reciprocal motion. An aim of the present invention is to obviate the abovementioned disadvantages of known art, in a simple, rational, and relatively economical solution.

A further aim of the invention is to provide a highly adaptable cam-free gathering machine for the various formats requested by the market, offering a high degree of production flexibility.

These aims are attained by the characteristics of the invention described in the independent claim herein below. The dependent claims define preferred and/or particularly advantageous aspects of the invention.

### DESCRIPTION OF THE INVENTION

In particular, the invention provides a machine for gathering hay comprising a frame affording two side elements rotatingly supporting a rotor exhibiting a plurality of substantially radial tooth element groups.

The rotor of the invention is modular and comprises a plurality of sections coaxially fixed together.

Thanks to this solution, there can be a considerable reduction in production costs of the rotor and consequently of the gathering machine, simultaneously increasing standardization of the elements that comprise a gathering machine according to requirements of use, as well as reducing the times required for the production of the gathering machine, and also lightening the structure and offering improved production versatility and flexibility, in particular when gathering machines of different longitudinal spans are required.

In the invention, each section of rotor comprises a plurality of longitudinal members supporting the tooth elements, the longitudinal members being arranged along an imaginary circumference and being solidly interlinked at the opposite extremities using two annular elements.

In this way the weight of the overall structure of the rotor is significantly reduced while maintaining considerable rigidity and resistance to flexion. Two contiguous sections of the rotor are solidly fixed to one another, end to end, by means of a reciprocal fixture between the two adjacent annular elements, using releasable fixture means, such as for example threaded fastening organs which prevent reciprocal rotation of the contiguous portions.

In this way, the rotor is self-bearing, sturdy and light and is directly supported by the flanks of the frame without any need for intermediate support elements.

Further, thanks to this solution the rotor is able to rotate with limited revolving friction, enabling a rotation velocity thereof (and therefore a gathering capacity) that is significantly higher with respect to the traditional rotors with a cam and without a cam.

With this solution, the reciprocal fixture of the sections comprising a rotor is simple, economical, and relatively fast.

Additionally, in a further aspect of the invention the longitudinal members, and consequently the tooth elements, of two contiguous sections of rotor, are reciprocally dealigned.

In this way the gathering action of the machine is effectively improved and easily varied according to needs (for example, directing the materials being gathered as desired), while also gathering more homogeneously, given that the gathering machine always has tooth elements in contact with the ground. Each of the tooth elements is advantageously oscillatingly associated to the rotor, for example on one of the longitudinal members, using a hinge element.

Further, each of the tooth element groups distributed on the rotor comprises a plurality of adjacent tooth elements on a plane that is perpendicular to the rotor axis.

A substantially rigid band is interposed between each tooth element group, folded on itself such as to wrap around at least a portion of the rotor, and fixed to the frame at ends thereof.

Further, respective disc bodies are associated to the annular end bodies of the rotor, each supporting an end pin, one of which is associable to motor means able to draw the rotor in rotation (i.e. all the modules of the rotor).

### BRIEF DESCRIPTION OF THE FIGURES

Further characteristics and advantages of the invention will better emerge from the detailed description that follows, provided by way of non-limiting example, with reference to the accompanying figures of the drawings.
Figure 1 is a lateral view of a gathering machine of the invention.
Figure 2 is a rear view from II of figure 1.
Figure 3 is a view from above from III.
Figure 4 is an exploded axonometric view of the rotor of the gathering machine of figure 1.
Figure 5 is a front view of the rotor of the gathering machine of figure 1 in an assembled configuration.

### BEST WAY OF CARRYING OUT THE INVENTION

With specific reference to the figures, a machine is denoted in its entirety by reference numeral 10 for gathering plant cuttings including hay, straw, or plant cuttings derived from pruning and falling to the ground after cutting by a mowing machine.

The machine 10 comprises a frame 11 provided with two lateral elements 12, for example individually lobe-shaped, joined at a tapered end by two crossbars, including an upper crossbar 13 and a lower crossbar 14 substantially aligned in plan view.

Each lateral element 12 affords a substantially cylindrical central hole 15, arranged such that the central holes 15 of the lateral elements are substantially coaxial.

The central holes 15 of the lateral elements 12 serve to rotatingly support a rotor 20 described in detail herein below.

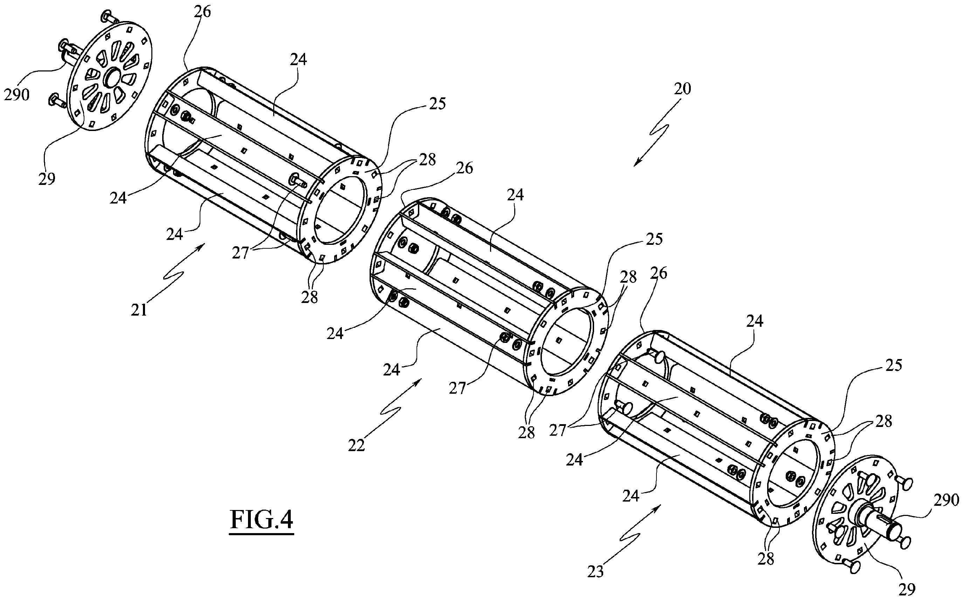

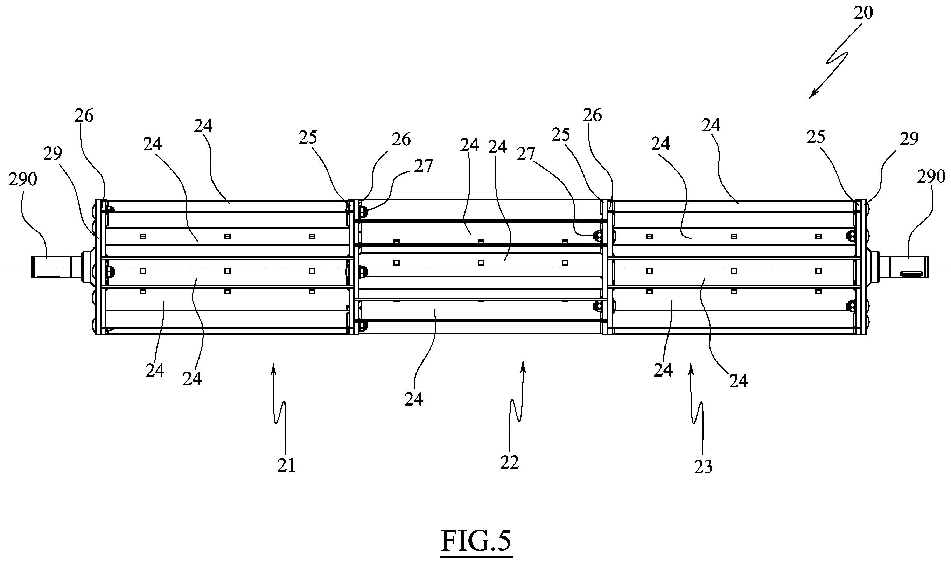

The rotor 20, as clearly seen in figures 4 and 5, is modular, realized from the joining of a plurality of sectional elements 21, 22, 23, (in the example three in number, but any number of sections is possible), including - with reference to the figures - a left end section 21, a central section 22 and a right end section 23.

Each section 21, 22, 23 comprises a plurality of identical longitudinal members 24, arranged in sequence along an imaginary circumference and substantially equidistant from each other.

The rotor 20 can comprise a different number of sections 21, 22, 23 and the sections may be of different lengths depending on requirements or, as illustrated in the example, they can be identical in length. Each longitudinal member 24 exhibits a substantially C-shaped transversal section oriented such that the concavity thereof faces externally of the machine.

Each section 21, 22, 23 comprises two identical annular elements, a right annular element 25 and a left annular element 26, respectively fixed, using known means, at opposite ends of the longitudinal members 24.

In particular, the longitudinal members 24 can be fastened by threaded means or other like fixing means.

Each section 21, 22, 23 is fixed to the contiguous section by reciprocal fixing of the annular elements 25, 26, achieved using releasable fixture means, such as threaded fixing organs, for example a plurality of bolts 27.

Each portion 21, 22, 23 is substantially conformed as a cage and exhibits a substantially empty internal cavity.

In practice, the left end section 21 is axially extended from the central section 22 by the coupling and coaxial fixture of the right annular element 25 of the left end section 21 to the left annular element 26 of the central section 22, while the right end section 23 is axially extended from the central section 22 by the coupling and coaxial fixing of the left annular element 26 of the right end section 23 to the right annular element 25 of the central section 22.

In practice, each annular element 25, 26 comprises a plurality of equidistant axial holes 28, for example 10 in number, used for insertion of bolts 27 also functioning as angular abutments for reciprocal fixing of the various sections 21, 22, 23.

In the example, the longitudinal members 24 of the central section 22 are offset with respect to the longitudinal members 24 of the left 21 and right 23 end sections (the end sections being reciprocally aligned).

The rotor 20 exhibits an overall length that is substantially equal to the sum of the lengths of the various sections 21, 22, 23 comprising the rotor.

Two disc elements 29 are fastened to the opposite sides of the end sections 21, 23 of the rotor 20, using further threaded locking organs, for example further bolts, the disc elements 29, for example, being suitably perforated and both exhibiting an end pin 290.

The end pins 290 insert individually into the central holes 15 of the lateral elements 12, for example by an interposing of bearings or similar parts, such that the lateral elements 12 rotatingly support the rotor 20, as described and configured above.

Each section 21, 22, 23 of the rotor 20 comprises a plurality of tooth element groups 30 projecting in substantially radial directions (slightly inclined relative to the radial direction by an angle substantially of 20° to 30° in the example of the figures) from the section.

In practice, each group of tooth elements 30 comprises a plurality of tooth elements 30 coplanar on a perpendicular plane to the rotation axis of the rotor 20 and, for example, equidistant from each other.

Each tooth element 30 of the tooth element group 30 is oscillatingly associated to the rotor by means of a hinge element 31.

In practice, each tooth element 30 is fixed to a longitudinal member 24 of the rotor 20, by means of a hinge element 31, precisely on the concave surface of the longitudinal member 24.

Each tooth element 30 is substantially wire-shaped and exhibits, at the end thereof fixed to the longitudinal member 24, a spiral winding having an axis parallel to the axis of the longitudinal member 24 (and thus of the rotor 20), the spiral winding comprising the hinge element 31.

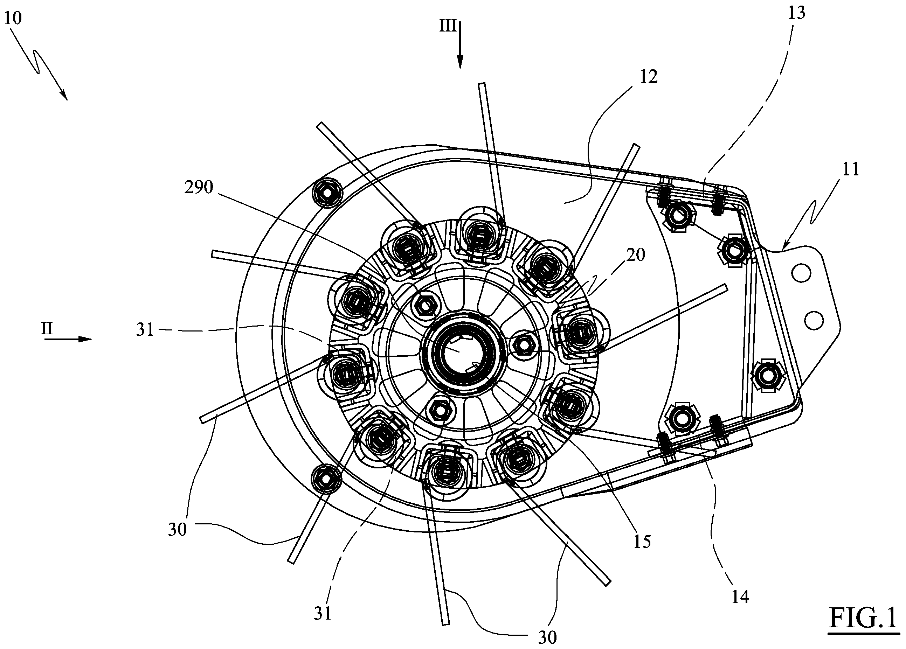

The hinge element 31 is thus a helical spring conferring a degree of flexibility and elasticity to the tooth element 30, such that if subjected to a flexion (for example due to ground contact or contact with other fixed objects, during a rotation induced by the rotor 20), the tooth element 30 is able to return to the equilibrium configuration of figure 1.

As already stated, each section 21, 22, 23 comprises a plurality of tooth element groups 30, arranged along the longitudinal axis of the section and, for example, equidistant from one another.

In practice, in order to be able to cover the full range of standardized spans of gathering machines 10, each section 21, 22, 23 of the rotor may comprise an array of 5, 6, 8, or 10 tooth element groups 30, depending on the lengths of the sections 21, 22, 23.

Depending on the required length, the rotor 20 can comprise a variable number of sections 21, 22, 23 of different standard lengths.

Advantageously, each tooth element 30 of two adjacent tooth element groups 30 is realized in a single piece; in practice the two tooth elements 30 are realized using the same wire element comprising two parallel and coplanar end portions (on a substantially radial plane of the rotor 20) defining the tooth elements 30, joined together at a central section wound in coils comprising the hinge element 31.

Further, at the hinge element 31, the pair of tooth elements of two adjacent tooth element groups 31 is fixed to the longitudinal member 24 by means of suitable threaded elements able to fasten a central portion of the spiral coil onto the longitudinal member.

For example, the tooth elements 30 of the central section 22 of the rotor 20 are offset relative to the tooth elements 30 of the end sections 21 and 23.

The upper crossbar 13 and the lower crossbar 14 exhibit a plurality of projecting appendages 16 (in a direction parallel to the lateral elements 12), substantially equidistant from one another.

In practice, the appendages 16 can be positioned in the intermediate space that separates the various tooth element groups 30 along the axis of the rotor 20.

Lastly, the frame 11 comprises a plurality of band elements 17 substantially rigid, curved into a substantially "C" shape, such as to envelope at least a portion of the rotor 20.

Each band element is fixed at the two ends thereof to the crossbars 13, 14.

In practice, the upper end of each band element 17 is fixed to the upper crossbar 13, for example by a pair of bolts, at one of the appendages 16, and the lower end of each band element 17 is analogously fixed to the appendage 16 of the lower crossbar 14 aligned in plan view with the appendage 16 of the upper crossbar 13.

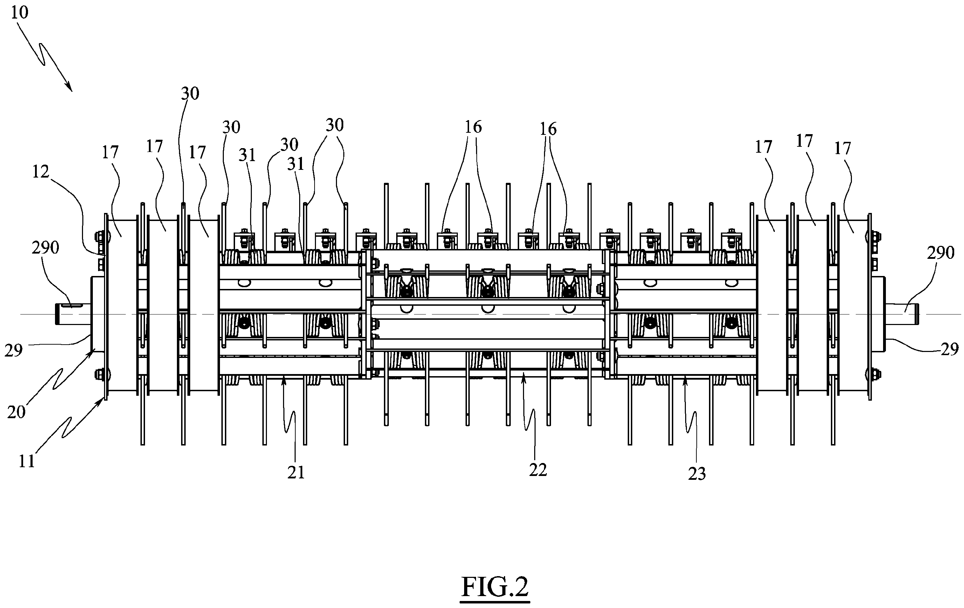

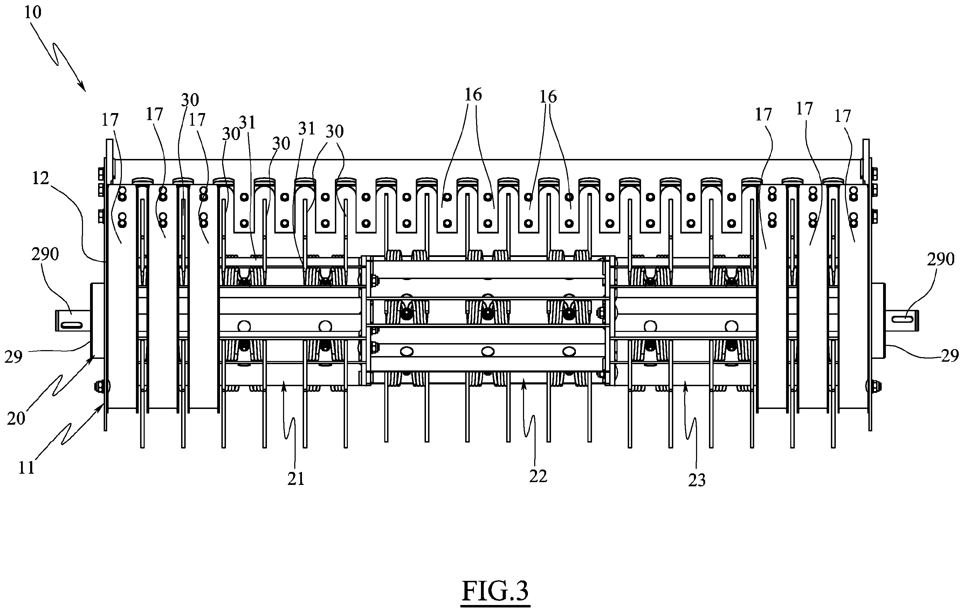

The plurality of band elements 17 (in figures 2 and 3 only a few are illustrated, fixed to the frame 11, leaving a central portion of the frame exposed such as to reveal the rotor 20 located internally thereof) define a sort of guard for the frame 11, with only the free ends of the tooth elements 30 extending outside of the frame 11.

Also, one of the pins 290 is associated to a drive means (not illustrated), for example using drive transmission means such as chains, belts, or similar, which drive the rotor 20 in rotation, and consequently the tooth elements 30, for the gathering of hay, straw, or similar plant cuttings from the ground, as is known to technical experts in the sector.

The motor means, in practice, are associated to a single pin 290 and draw in rotation all the portions 21, 22, 23 of which the rotor 20 is composed.

The invention as described above is susceptible to numerous modifications and variants, all falling within the scope of the invention, defined by the appended claims. Furthermore, all the details could be replaced using technically equivalent elements.

In practice the materials used, and the contingent shapes and dimensions, may be of any type depending on requirements, within the scope of the invention as claimed below.

## Claims

1. A machine (10) for gathering plant cuttings comprising a frame (11) affording two side elements (12) rotatingly supporting a rotor (20) exhibiting a plurality of substantially radial tooth element groups (30), the rotor (20) being of a modular type and comprising a plurality of sections (21, 22, 23) coaxially fixed to one another, wherein each of the sections (21, 22, 23) of the rotor (20) comprises a plurality of longitudinal members (24) able to support the tooth elements (30), the longitudinal members (24) being flanked along an imaginary circumference and fixed to one another at opposite ends by means of two annular elements (25, 26), to which the longitudinal members (24) are solidly fixed, **characterised in that** two contiguous sections (21, 22; 22, 23) of the rotor (20) are solidly fixed to one another by reciprocal fixing of two facing annular elements (25, 26), carried out using removable fixing means (27).

2. The machine (10) of claim 1, wherein the removable fixing means comprise threaded locking organs (27).

3. The machine (10) of claim 1, wherein fixed to each opposite end of the end sections (21, 23) of the rotor (20) is, respectively, a disc-shaped body (29) which bears an end pin (290) supported in rotation by a respective flank (12) of the frame (11).

4. The machine (10) of claim 1, wherein the longitudinal members (24) of two contiguous sections (21, 22; 22, 23) of the rotor (20) are de-aligned with respect to one another.

5. The machine (10) of claim 1, wherein each of the tooth elements (30) is oscillatingly associated to the rotor (20) by means of a hinge element (31).

6. The machine (10) of claim 1, wherein each tooth element group (30) comprises a plurality of tooth elements (30) lying on a plane perpendicular to the axis of the rotor (20).

7. The machine (10) of claim 6, wherein a substantially rigid band element (17) is interposed between each tooth element group (30), which rigid band element (17) is curved such as to wrap around at least a portion of the rotor (20) and is fixed to the frame (11) at ends thereof.

## Patentansprüche

1. Maschine (10) zum Sammeln von Pflanzenschnitten, umfassend einen Rahmen (11), der zwei Seitenelemente (12) ermöglicht, die drehbar einen Rotor (20) stützen, der eine Vielzahl von im Wesentlichen radialen Zahnelementgruppen (30) aufweist, wobei der Rotor (20) von einem modularen Typ ist und eine Vielzahl von Abschnitten (21, 22, 23) umfasst, die koaxial aneinander befestigt sind, wobei jeder der Abschnitte (21, 22, 23) des Rotors (20) eine Vielzahl von Längsgliedern (24) umfasst, die in der Lage sind, die Zahnelemente (30) zu stützen, wobei die Längsglieder (24) entlang eines imaginären Umfangs flankiert und miteinander an gegenüberliegenden Enden mittels zweier ringförmiger Elemente (25, 26) befestigt sind, an denen die Längsglieder (24) fest befestigt sind, **dadurch gekennzeichnet, dass** zwei benachbarte Abschnitte (21, 22; 22, 23) des Rotors (20) durch gegenseitiges Befestigen von zueinander zeigenden ringförmigen Elementen (25, 26) fest miteinander befestigt sind, was unter Verwendung von abnehmbaren Befestigungsmitteln (27) durchgeführt wird.

2. Maschine (10) nach Anspruch 1, wobei die abnehmbaren Befestigungsmittel Gewindeverriegelungsorgane (27) umfassen.

3. Maschine (10) nach Anspruch 1, wobei befestigt an jedem gegenüberliegenden Ende der Endabschnitte (21,23) des Rotors (20) jeweils ein scheibenförmiger Körper (29) ist, der einen Endbolzen (290) trägt, der in der Drehung durch eine jeweilige Flanke (12) des Rahmens (11) gestützt wird.

4. Maschine (10) nach Anspruch 1, wobei die Längsglieder (24) von zwei benachbarten Abschnitten (21, 22; 22, 23) des Rotors (20) zueinander versetzt sind.

5. Maschine (10) nach Anspruch 1, wobei jedes der Zahnelemente (30) mittels eines Scharnierelements (31) oszillierend mit dem Rotor (20) assoziiert ist.

6. Maschine (10) nach Anspruch 1, wobei jede Zahnelementgruppe (30) eine Vielzahl von Zahnelementen (30) umfasst, die auf einer Ebene senkrecht zur Achse des Rotors (20) liegen.

7. Maschine (10) nach Anspruch 6, wobei ein im Wesentlichen starres Bandelement (17) zwischen jede Zahnelementgruppe (30) eingelegt ist, wobei das starre Bandelement (17) gekrümmt ist, um sich um mindestens einen Abschnitt des Rotors (20) zu wickeln und am Rahmen (11) an Enden davon befestigt ist.

## Revendications

1. Machine (10) pour le rassemblement de boutures, comprenant un châssis (11) qui présente deux éléments latéraux (12) soutenant en rotation un rotor (20) possédant une pluralité de groupes d'éléments à dent substantiellement radiaux (30), le rotor (20) étant de type modulaire et comprenant une diversité de sections (21, 22, 23) fixées entre elles de manière coaxiale, dans laquelle chaque section (21, 22, 23) du rotor (20) comprend plusieurs membres longitudinaux (24) capables de supporter les éléments à dent (30), les membres longitudinaux (24) encadrant une circonférence imaginaire et étant fixés les uns aux autres aux extrémités opposées par le biais de deux éléments annulaires (25, 26), auxquels les membres longitudinaux (24) sont solidement fixés, **caractérisée en ce que** deux sections contiguës (21, 22; 22, 23) du rotor (20) sont solidement fixées l'une à l'autre par la fixation réciproque de deux éléments annulaires (25, 26), effectuée à l'aide de moyens de fixation amovibles (27).

2. Machine (10) selon la revendication 1, dans laquelle les moyens de fixation amovibles comprennent des organes de verrouillage filetés (27).

3. Machine (10) selon la revendication 1, dans laquelle un corps en forme de disque (29) qui supporte une broche d'extrémité (290) maintenue en rotation par un flanc respectif (12) du châssis (11) est respectivement fixé à chaque extrémité opposée des sections d'extrémité (21, 23) du rotor.

4. Machine (10) selon la revendication 1, dans laquelle les membres longitudinaux (24) de deux sections contiguës (21, 22; 22, 23) du rotor (20) ne sont pas alignés les uns par rapport aux autres.

5. Machine (10) selon la revendication 1, dans laquelle les éléments à dent (30) sont associés de manière oscillante au rotor (20) par le bais d'un élément de charnière (31).

6. Machine (10) selon la revendication 1, dans laquelle chaque groupe d'éléments à dent (30) comprend une pluralité d'éléments à dent (30) reposant sur un plan perpendiculaire à l'axe du rotor (20).

7. Machine (10) selon la revendication 6, dans laquelle un élément de bande substantiellement rigide (17) est interposé entre chaque groupe d'éléments à dent (30), le dit élément de bande rigide (17) est incurvé afin de s'enrouler autour d'au moins une partie du rotor (20) et est fixé au châssis (11) à ses extrémités.
